# EUROPÄISCHE PATENTSCHRIFT

(11) **EP 1 761 701 B1**
(45) Veröffentlichungstag und Bekanntmachung des Hinweises auf die Patenterteilung: **17.02.2010**
(21) Anmeldenummer: 04802813.8
(22) Anmeldetag: 24.11.2004
(51) Int. Cl.: F02M 61/14, F02M 61/18, F02B 23/10

(54) **BRENNSTOFFEINSPRITZSYSTEM**
FUEL-INJECTION SYSTEM
SYSTEME D'INJECTION DE CARBURANT

(30) Priorität: 05.02.2004 DE 102004005727
(43) Veröffentlichungstag der Anmeldung: 14.03.2007
(73) Patentinhaber: ROBERT BOSCH GMBH, 70442 Stuttgart (DE)
(72) Erfinder: VOGEL, Manfred, 71254 Ditzingen (DE); HERDEN, Werner, 70839 Gerlingen (DE); ECKER, Rainer, 70806 Kornwestheim (DE)
(86) Internationale Anmeldenummer: PCT/DE2004/002604
(87) Internationale Veröffentlichungsnummer: WO 2005/075815

(56) Entgegenhaltungen:
- EP-A- 1 375 905
- DE-A1- 10 026 323
- DE-A1- 10 032 336
- DE-A1- 10 116 466
- PATENT ABSTRACTS OF JAPAN Bd. 017, Nr. 465 (M-1468), 25. August 1993 (1993-08-25) & JP 05 106442 A (YANMAR DIESEL ENGINE CO LTD), 27. April 1993 (1993-04-27)

## Beschreibung

### Stand der Technik

Die Erfindung geht aus von einem Brennstoffeinspritzsystem nach der Gattung des Anspruchs 1.

DE 100 26 323 A zeigt ein Brennstoffeinspritzsystem, das eine Spraywolke erzeugt, wobei ein erster Öffnungswinkel des Brennstoffmantels in einer ersten Ebene größer ist als ein zweiter Öffnungswinkel in einer senkrecht zur ersten Ebene verlaufenden zweiten Ebene.

Beispielsweise ist aus der DE 101 03 050 A1 ein Brennstoffeinspritzventil mit mehreren Abspritzöffnungen bekannt. Die Abspritzöffnungen sind so angeordnet, daß beim Einspritzvorgang ein nach allen Seiten möglichst gleichmäßiger, nach allen Seiten mit einem gleichen Öffnungswinkel öffnender Brennstoffmantel im Brennraum erzeugt wird.

Nachteilig bei dem aus der obengenannten Druckschrift bekannten Brennstoffeinspritzsystem ist insbesondere, daß die Verteilung von Brennstoff in Brennräume mit einem nicht rotationsymmetrischen Brennraumdach nur unzureichend gleichmäßig erfolgt.

### Vorteile der Erfindung

Das erfindungsgemäße Brennstoffeinspritzsystem mit den Merkmalen des Anspruchs 1 hat demgegenüber den Vorteil, daß die Verteilung von Brennstoff in Brennräume mit nichtrotationsymmetrischem Brennraumdach gleichmäßiger erfolgen kann.

Durch die in den abhängigen Ansprüchen aufgeführten Maßnahmen sind vorteilhafte Weiterentwicklungen des im Anspruch 1 angegebenen Brennstoffeinspritzsystems möglich.

Die Spraywolke ist so geformt, daß sich ein im umfänglichen Verlauf der Spraywolke gleichbleibender Abstandswinkel zwischen Brennraumdach und Spraywolke ergibt, wobei die Spraywolke als "Duschkopfspray" ausgebildet ist, die viele Brennstoffstrahlen gleichmäßig in den Brennsraum verteilt. Dadurch kann die Verteilung und die Verbrennung des Brennstoffes verbessert werden.

In einer weiteren Weiterbildung spritzt das Brennstoffeinspritzventil durch ein sich im Querschnitt der zweiten Ebene konisch aufweitendes Brennraumdach ein, wobei sich das Brennraumdach im Querschnitt der ersten Ebene mit einer größeren Steigung aufweitet.

Vorteilhafterweise wird der Brennstoff wenigstens teilweise in eine Kolbenmulde des Kolbens eingespritzt. Dadurch können jeweils gleiche Abstände der abspritzseitigen Enden der Brennstoffstrahlen zur in Strahlrichtung angeordneten Wandung sehr einfach für alle oder nur einen Teil der Brennstoffstrahlen erreicht werden.

Vorteilhafterweise weist die Kolbenmulde zumindest eine Erhebung auf.

Ist die Erhebung vorteilhafterweise mittig in der Kolbenmulde angeordnet, lassen sich die Brennstoffstrahlen mit nur geringem Aufwand mit jeweils vorteilhaft in der Verlängerung ihrer Strahlachse gelegenen gleichen Abständen zur Wandung der Kolbenmulde einspritzen.

Vorteilhafterweise dringen die äußeren Brennstoffstrahlen der Spraywolke tiefer in den Brennraum ein als die inneren Brennstoffstrahlen. Dadurch kann die Form des Brennstoffmantels der Geometrie der Kolbenmulde vorteilhaft angepaßt werden.

In einer weiteren Weiterbildung des erfindungsgemäßen Brennstoffeinspritzventils sind die Durchmesser der Abspritzöffnungen der inneren Brennstoffstrahlen kleiner als die Durchmesser der Abspritzöffnungen der äußeren Brennstoffstrahlen und/oder die Abspritzöffnungen der inneren Brennstoffstrahlen erweitern sich in Abspritzrichtung im abspritzseitigen Bereich und/oder der an der Abspritzöffnung der inneren Brennstoffstrahlen anstehende Brennstoffdruck ist durch baulich Maßnahmen reduziert. Dadurch kann die Eindringtiefe der inneren Brennstoffstrahlen mit einfachen Maßnahmen reduziert werden.

Erfindungsgemäß spritzt das Brennstoffeinspritzventil zentral in die Mitte des Brennraums ein. Dadurch ist die Erreichbarkeit der gesamten Brennraumluft gegeben.

Vorteilhafterweise weist das Brennstoffeinspritzventil 20 bis 40 Abspritzöffnungen auf. Die Eindringtiefe des Brennstoffmantels und der einzelnen Brennstoffstrahlen wird dadurch vorteilhafterweise deutlich reduziert und die Oberfläche des mit der Verbrennungsluft durch die Scherkontaktfläche in Kontakt stehenden Brennstoffsprays ist vorteilhaft erhöht.

In einer weiteren Weiterbildung weisen die Spreizwinkel zwischen den Brennstoffstrahlen einen Winkel von 15° bis 25° auf, idealerweise 20°. Dadurch ist eine optimale Homogenisierung der Brennstoffes mit der Verbrennungsluft möglich.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein Beispiel eines gattungsgemäßen Brennstoffeinspritzventils,
- Fig. 2: ein Beispiel einer Anordnung eines erfindungsgemäß verwendeten Brennstoffeinspritzventils in einem Brennraumdach,
- Fig. 3: eine schematische Darstellung einer durch ein erstes Ausführungsbeispiel des erfindungsgemäß verwendeten Brennstoffeinspritzventils erzeugten Spraywolke im Querschnitt der ersten Ebene entlang der Linie III-III in Fig. 2,
- Fig. 4: eine schematischen Darstellung einer durch das erste Ausführungsbeispiel des erfindungsgemäß verwendeten Brennstoffeinspritzventils erzeugten Spraywolke im Querschnitt der zweiten Ebene entlang der Linie IV-IV in Fig. 2,
- Fig. 5: einen schematischen Schnitt durch den Ventilsitzkörper des ersten Ausführungsbeispiels des erfindungsgemäß verwendeten Brennstoffeinspritzventils im Querschnitt der ersten Ebene entlang der Linie III-III in Fig. 2,
- Fig. 6: einen schematischen Schnitt durch den Ventilsitzkörper des ersten Ausführungsbeispiels des erfindungsgemäß verwendeten Brennstoffeinspritzventils im Querschnitt der zweiten Ebene entlang der Linie IV-IV in Fig. 2 und
- Fig. 7: eine schematische Darstellung einer durch ein zweites Ausführungsbeispiels eines erfindungsgemäß verwendeten Brennstoffeinspritzventils erzeugten Spraywolke im Querschnitt der zweiten Ebene entlang der Linie IV-IV in Fig. 2.

### Beschreibung der Ausführungsbeispiele

Nachfolgend werden Ausführungsbeispiele der Erfindung beispielhaft beschrieben. Übereinstimmende Bauteile sind dabei mit übereinstimmenden Bezugszeichen versehen.

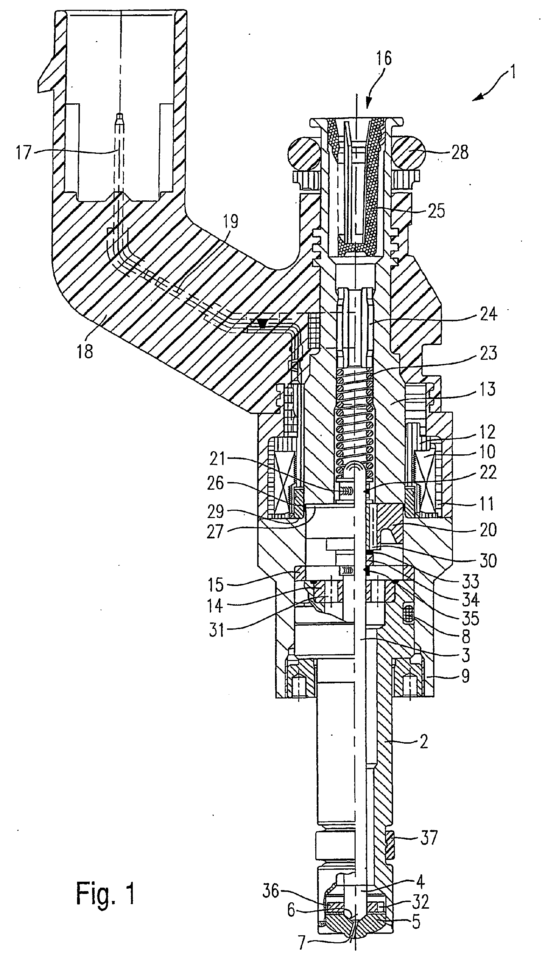

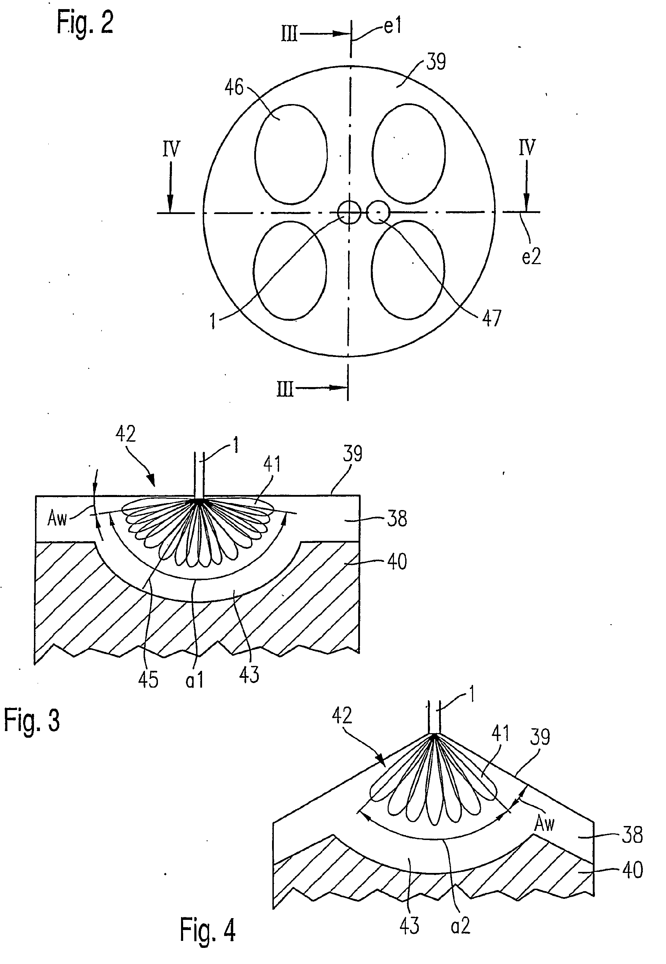

Bevor anhand der Figuren 3 bis 7 bevorzugte erfindungsgemäße Ausführungsbeispiele näher beschrieben werden, soll zum besseren Verständnis der Erfindung zunächst anhand von Fig. 1 ein gattungsgemäßes Brennstoffeinspritzventil bezüglich seiner wesentlichen Bauteile kurz erläutert werden.

Ein in Fig. 1 dargestelltes Beispiel eines gattungsgemäßen Brennstoffeinspritzventils 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 weist abspritzseitig einen Ventilschließkörper 4 auf, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Beispiel um ein nach innen öffnendes Brennstoffeinspritzventil 1, welches über eine Abspritzöffnung 7 verfügt. Der Düsenkörper 2 ist durch eine Dichtung 8 gegen einen Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Abstand 26 voneinander getrennt rund miteinander durch ein nicht ferromagnetisches Verbindungsbauteil 29 verbunden. Die Magnetspule 10 wird über eine elektrische Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hübeinstellung dient eine zugepaarte Einstellscheibe 15. An der anderen Seite der Einstellscheibe 15 befindet sich der Anker 20. Dieser steht über einen ersten Flansch 21 mit der Ventilnadel 3 in Verbindung, welche durch eine Schweißnaht 22 mit dem ersten Flansch 21 verbunden ist. Auf dem ersten Flansch 21 stützt sich eine spiralförmige Rückstellfeder 23 ab, welche in der vorliegenden Bauform des Brennstoffeinspritzventils 1 durch eine Hülse 24 auf Vorspannung gebracht wird.

In der Ventilnadelführung 14, im Anker 20 und an einem Führungselement 36 verlaufen Brennstoffkanäle 30, 31 und 32. Der Brennstoff wird über eine zentrale Brennstoffzufuhr 16 zugeführt und durch ein Filterelement 25 gefiltert. Das Brennstoffeinspritzventil 1 ist durch einen Gummiring 28 gegen eine nicht weiter dargestellte Brennstoffverteilerleitung und durch eine Dichtung 37 gegen einen nicht weiter dargestellten Zylinderkopf abgedichtet.

An der abspritzseitigen Seite des Ankers 20 ist ein ringförmiges Dämpfungselement 33, welches aus einem Elastomerwerkstoff besteht, angeordnet. Es liegt auf einem zweiten Flansch 34 auf, welcher über eine Schweißnaht 35 stoffschlüssig mit der Ventilnadel 3 verbunden ist.

Im Ruhezustand des Brennstoffeinspritzventils 1 wird der Anker 20 von der Rückstellfeder 23 entgegen seiner Hubrichtung so beaufschlagt, daß der Ventilschließkörper 4 an der Ventilsitzfläche 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den ersten Flansch 21, welcher mit der Ventilnadel 3 verschweißt ist, ebenfalls in Hubrichtung mit. Der mit der Ventilnadel 3 in Verbindung stehende Ventilschließkörper 4 hebt von der Ventilsitzfläche 6 ab, und der druckbehaftet zugeführte Brennstoff wird durch die Abspritzöffnung 7 in den nicht dargestellten Brennraum abgespritzt.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilnadel 3 in Verbindung stehende erste Flansch 21 entgegen der Hubrichtung bewegt. Die Ventilnadel 3 wird dadurch in die gleiche richtung bewegt, wodurch der Ventilschließkörper 4 auf der Ventilsitzfläche 6 aufsetzt und das Brennstoffeinspritzventil 1 geschlossen wird.

Fig. 2 zeigt ein Ausführungsbeispiel einer Anordnung eines Brennstoffeinspritzventils 1 in einem Brennraumdach 39 eines erfindungsgemäßen Brennstoffeinspritzsystems, wobei das Brennstoffeinspritzventil 1 zentriert im Brennraumdach 39 angeordnet ist. Das Brennraumdach 39 begrenzt zusammen mit einem nicht näher dargestellten Zylinder und einem in Fig. 3, 4 und 7 dargestellten Kolben 40 einen Brennraum 38. Das vom Brennraum 38 her dargestellte Brennraumdach 39 weist vier Ventile 46 auf, die dem Gasaustausch dienen. Eine Zündkerze 47 ragt in nur kurzem Abstand zum Brennstoffeinspritzventils 1 in den Brennraum 38. Eine erste Ebene e1 und eine zweite Ebene e2 schneiden den Brennraum 38 und das abspritzseitige Ende des erfindungsgemäßen Brennstoffeinspritzventils 1, wobei die zweite Ebene e2 senkrecht zur ersten Ebene e2 verläuft und diese schneidet.

Fig. 3 zeigt eine schematischen Darstellung einer durch ein erstes Ausführungsbeispiel des Brennstoffeinspritzventils 1 eines erfindungsgemäßen Brennstoffeinspritzsystems erzeugten Spraywolke 42 im Querschnitt der ersten Ebene e1 entlang der Linie III-III in Fig. 2. Die Spraywolke 42, welche durch beispielsweise vierzig Brennstoffstrahlen 41 aufgespannt wird, weist im Querschnitt entlang der ersten Ebene e1 die Form eines Kreisausschnitts auf. Alle Brennstoffstrahlen 41 greifen gleich weit in den Brennraum 38 hinein. Die Spraywolke 42 ist koaxial im Brennraum 38 angeordnet. Das Brennraumdach 39 weist im Querschnitt der ersten Ebene e1 einen rechteckförmigen Verlauf auf. Die Spraywolke 42 weist zum Brennraumdach 39 einen gleichbleibenden Abstandswinkel Aw auf. Im Querschnitt der ersten Ebene e1 öffnet sich die Spraywolke 42 mit einem ersten Öffnungswinkel a1, der größer ist als ein in Fig. 3 dargestellter zweiter Öffnungswinkel a2.

Der Kolben 40 weist eine im Querschnitt der ersten Ebene e1 kreisabschnittsförmige Kolbenmulde 43 auf, die zentriert im Kolben 40 angeordnet ist. Die Brennstoffstrahlen 41 weisen jeweils eine Strahlachse 45 auf. Je nach der Position des Kolbens 40 beim Einspritzvorgang, zielt bzw. zielen ein Teil oder sämtliche Brennstoffstrahlen 41 in der Verlängerung entlang ihrer Strahlachsen 45 auf die Oberfläche der Kolbenmulde 43. Die Abstände der Enden der Brennstoffstrahlen 41 zur Oberfläche der Kolbenmulde 43 in der Verlängerung entlang ihrer Strahlachsen 45 ist dabei gleich.

Fig. 4 zeigt eine schematischen Darstellung der durch das erste Ausführungsbeispiel des Brennstoffeinspritzventils 1 des erfindungsgemäßen Brennstoffeinspritzsystems erzeugten Spraywolke 42 im Querschnitt der zweiten Ebene e2 entlang der Linie IV-IV in Fig. 2. Der zweite Öffnungswinkel a2 ist deutlich kleiner als der in Fig. 2 dargestellte erste Öffnungswinkel a1, wobei der Abstandswinkel Aw dies gleiche Größe aufweist wie der in Fig. 2 gezeigt Abstandswinkel Aw. Das Brennraumdach 39 erweitert sich in der hier gezeigten Perspektive, welche senkrecht zur zweiten Ebene e2 ist, konisch vom Brennstoffeinspritzventil 1 weg.

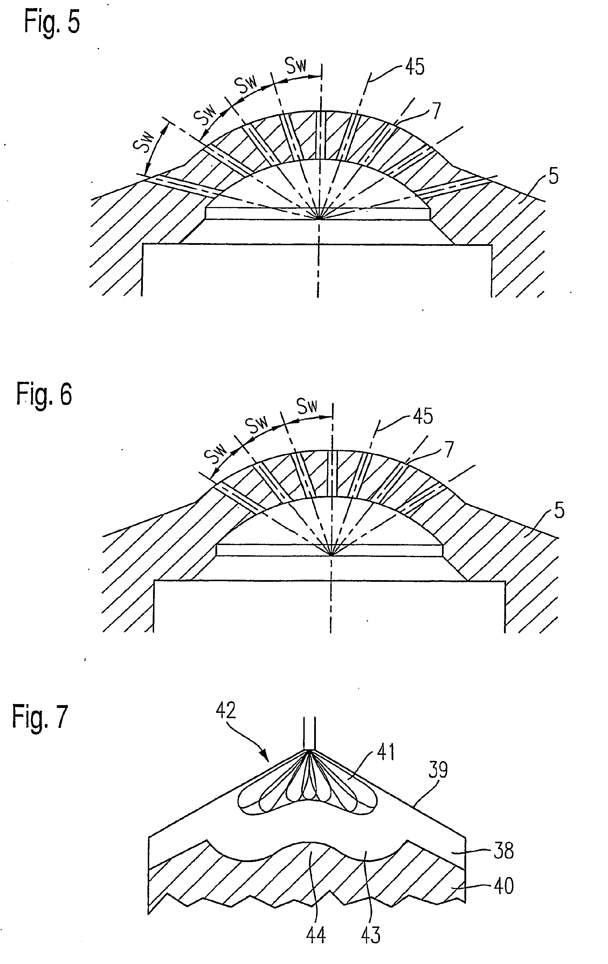

Fig. 5 zeigt einen schematischen Schnitt durch den Ventilsitzkörper 5 des ersten Ausführungsbeispiels des Brennstoffeinspritzventils 1 des erfindungsgemäßen Brenristoffeinspritzsystems im Querschnitt der ersten Ebene e1 entlang der Linie III-III in Fig. 2. Die neun entlang der ersten Ebene e1 liegenden Abspritzöffnungen 7 weisen zueinander einen Spreitzwinkel Sw von beispielsweise 20° auf.

Fig. 6 zeigt einen schematischen Schnitt durch den Ventilsitzkörper 5 des ersten Ausführungsbeispiels des Brennstoffeinspritzventils 1 des erfindungsgemäßen Brennstoffeinspritzsystems im Querschnitt der zweiten Ebene e2 entlang der Linie IV-IV in Fig. 2. Die sieben entlang der zweiten Ebene e2 liegenden Abspritzöffnungen 7 weisen zueinander ebenfalls den Spreitzwinkel Sw von 20° auf. Durch die im Vergleich zur Anzahl der in der ersten Ebene e1 liegenden Abspritzöffnungen 7 kleinere Zahl der Abspritzöffnungen 7 in der zweiten Ebene e2, ist der zweite Öffnungswinkel a2 deutlich kleiner als der erste Öffnungswinkel a1.

Fig. 7 zeigt eine schematischen Darstellung einer mit einem zweiten Ausführungsbeispiel eines Brennstoffeinspritzventils 1 eines erfindungsgemäßen Brennstoffeinspritzsystems erzeugten Spraywolke 42 im Querschnitt der zweiten Ebene e2 entlang der Linie IV-IV in Fig. 2. Die Kolbenmulde 43 weist eine wellenförmige Erhebung 44 auf, die mittig in der Kolbenmulde 43 angeordnet ist. Die in der Mitte der Spraywolke 42 angeordneten Brennstoffstrahlen 41 dringen dabei weniger tief in den Brennraum 38 ein als die äußeren Brennstoffstrahlen 41. Die Form der Spraywolke 42 ist somit der Form der Kolbenmulde 43 entsprechend geformt, so daß alle in die Kolbenmulde 43 zielenden Brennstoffstrahlen 41 zur Kolbenmulde 43 den gleichen Abstand einhalten. Die Abspritzöffnungen 7 der inneren Brennstoffstrahlen 41 sind im Vergleich zu den Abspritzöffnungen 7 der äußeren Brennstoffstrahlen 41 im Durchmesser reduziert und/oder im abspritzseitigen Bereich konisch erweitert. Beispielsweise kann auch der an der Abspritzöffnung 7 der inneren Brennstoffstahlen anstehende Druck des Brennstoffs durch bauliche Maßnahmen reduziert sein.

Die zum Brennraum 38 gerichtete Oberfläche des Kolbens 40 fällt in diesem Ausführungsbeispiel vom Außenrand der Kolbenmulde 43 ausgehend in Abspritzrichtung konisch ab.

Die Erfindung ist nicht auf die dargestellten Ausführungsbeispiele beschränkt. Die Merkmale der Ausführungsbeispiele können in beliebiger Weise miteinander kombiniert werden.

## Patentansprüche

1. Brennstoffeinspritzsystem zum direkten Einspritzen von Brennstoff in einen Brennraum (38) durch ein Brennraumdach (39), welches gegenüber einem Kolben (40) angeordnet ist, mit einem Brennstoffeinspritzventil (1) mit einer Vielzahl von Abspritzöffnungen (7), wobei durch jeweils eine Abspritzöffnung (7) ein Brennstoffstrahl (41) erzeugt wird und durch die Vielzahl von Brennstoffstrahlen (41) im Brennraum (38) eine Spraywolke (42) mit einem sie begrenzenden Brennstoffmantel erzeugt wird,
wobei das Brennstoffeinspritzventil (1) zentral in der Mitte des Brennraumdachs (39) angeordnet ist,
wobei der Brennstoffmantel der Spraywolke (42) sich um 360° erstreckt und der Brennstoffmantel einen Öffnungswinkel (a1, a2) einschließt, der über den umfänglichen Verlauf der Spraywolke (42) variabel ist, wobei gilt dass ein erster Öffnungswinkel (a1) des Brennstoffmantels in einer ersten Ebene (e1) größer ist als ein zweiter Öffnungswinkel (a2) in einer senkrecht zur ersten Ebene (e1) verlaufenden zweiten Ebene (e2) **dadurch gekennzeichnet, dass** die Abspritzöffnungen (7) derart ausgerichtet sind und das Brennraumdach (39) derart ausgestaltet ist, dass die Spraywolke (42) so geformt ist, dass sich ein im umfänglichen Verlauf der Spraywolke (42) gleichbleibender Abstandswinkel (Aw) zwischen Brennraumdach (39) und Brennstoffmantel der Spraywolke (42) ergibt.

2. Brennstoffeinspritzsystem nach Anspruch 1,
**dadurch gekennzeichnet,**
**dass** das Brennstoffeinspritzventil (1) durch ein sich im Querschnitt der zweiten Ebene (e2) konisch vom Brennstoffeinspritzventil (1) aufweitendes Brennraumdach (39) einspritzt, wobei sich das Brennraumdach (39) im Querschnitt der ersten Ebene (e1) mit einer größeren Steigung aufweiten.

3. Brennstoffeinspritzsystem nach Anspruch 1 oder 2,
**dadurch gekennzeichnet,**
**dass** die Abspritzöffnungen (7) des Brennstoffeinspritzventils (1) derart ausgerichtet sind, dass der abgegebene Brennstoff der Spraywolke (42) in Richtung einer Kolbenmulde (43) des Kolbens (40) eingespritzt wird.

4. Brennstoffeinspritzsystem nach Anspruch 3,
**dadurch gekennzeichnet,**
**dass** die Kolbenmulde (43) zumindest eine Erhebung (44) aufweist.

5. Brennstoffeinspritzsystem nach Anspruch 4,
**dadurch gekennzeichnet,**
**dass** die Erhebung (44) mittig in der Kolbenmulde (43) angeordnet ist.

6. Brennstoffeinspritzsystem nach einem der Ansprüche 3 bis 5,
**dadurch gekennzeichnet,**
**dass** die in die Kolbenmulde (43) eingespritzten Brennstoffstrahlen (41) in der Verlängerung entlang ihrer Strahlachse (45) jeweils gleiche Abstände zur Oberfläche der Kolbenmulde (43) aufweisen.

7. Brennstoffeinspritzsystem nach einem der vorangegangenen Ansprüche,
**dadurch gekennzeichnet,**
**dass** die in der Mitte der Spraywolke (42) angeordneten inneren Brennstoffstrahlen (41) weniger tief in den Brennraum (38) eindringen als die äußeren Brennstoffstrahlen (41), da
die Durchmesser der Abspritzöffnungen (7) der inneren Brennstoffstrahlen (41) kleiner sind als die Durchmesser der äußeren Brennstoffstrahlen (41) und/oder sich die Abspritzöffnungen (7) der inneren Brennstoffstrahlen (41) im abspritzseitigen Bereich erweitern.

8. Brennstoffeinspritzsystem nach einem der vorangegangenen Ansprüche,
**dadurch gekennzeichnet,**
**dass** das Brennstoffeinspritzventil (1) 20 bis 40 Abspritzöffnungen (7) aufweist.

9. Brennstoffeinspritzsystem nach einem der vorangegangenen Ansprüche,
**dadurch gekennzeichnet,**
**dass** die Abspritzöffnungen (7) im Querschnitt zueinander einen Spreizwinkel (Sw) von 15° bis 25°, insbesondere 20° aufweisen.

## Claims

1. Fuel injection system for directly injecting fuel into a combustion chamber (38) through a combustion chamber roof (39) which is arranged opposite a piston (40), having a fuel injection valve (1) with a multiplicity of ejection openings (7), with a fuel jet (41) being generated by each ejection opening (7), and with a spray cloud (42), with a fuel envelope which delimits it, being generated in the combustion chamber (38) by the multiplicity of fuel jets (41),
with the fuel injection valve (1) being arranged centrally in the middle of the combustion chamber roof (39),
with the fuel envelope of the spray cloud (42) extending through 360° and with the fuel envelope enclosing an opening angle (a1, a2) which is variable over the circumferential profile of the spray cloud (42), with a first opening angle (a1) of the fuel envelope in a first plane (e1) being greater than a second opening angle (a2) in a second plane (e2) which runs perpendicular to the first plane (e1), **characterized in that** the ejection openings (7) are aligned, and the combustion chamber roof (39) is designed, in such a way that the spray cloud (42) is shaped in such a way as to generate a spacing angle (Aw), which remains constant over the circumferential profile of the spray cloud (42), between the combustion chamber roof (39) and the fuel envelope of the spray cloud (42).

2. Fuel injection system according to Claim 1,
**characterized**
**in that** the fuel injection valve (1) injects through a combustion chamber roof (39) which widens conically from the fuel injection valve (1) in the cross section of the second plane (e2), with the combustion chamber roof (39) widening with a larger gradient in the cross section of the first plane (e1).

3. Fuel injection system according to Claim 1 or 2,
**characterized**
**in that** the ejection openings (7) of the fuel injection valve (1) are aligned in such a way that the discharged fuel of the spray cloud (42) is injected in the direction of a piston depression (43) of the piston (40) .

4. Fuel injection system according to Claim 3,
**characterized**
**in that** the piston depression (43) has at least one elevation (44).

5. Fuel injection system according to Claim 4,
**characterized**
**in that** the elevation (44) is arranged centrally in the piston depression (43).

6. Fuel injection system according to one of Claims 3 to 5,
**characterized**
**in that** the fuel jets (41) which are injected into the piston depression (43) are in each case spaced apart equally, in the projection along their jet axes (45), from the surface of the piston depression (43).

7. Fuel injection system according to one of the preceding claims,
**characterized**
**in that** the inner fuel jets (41) which are arranged in the centre of the spray cloud (42) penetrate less far into the combustion chamber (38) than the outer fuel jets (41), since
the diameters of the ejection openings (7) of the inner fuel jets (41) are smaller than the diameters of the outer fuel jets (41) and/or the ejection openings (7) of the inner fuel jets (41) widen in the ejection-side region.

8. Fuel injection system according to one of the preceding claims,
**characterized**
**in that** the fuel injection valve (1) has 20 to 40 ejection openings (7).

9. Fuel injection system according to one of the preceding claims,
**characterized**
**in that** the ejection openings (7), in cross section, have a spread angle (Sw) with respect to one another of 15° to 25°, in particular 20°.

## Revendications

1. Système d'injection de carburant pour l'injection directe de carburant dans une chambre de combustion (38) par un dessus de chambre de combustion (39), qui est disposé en face d'un piston (40), avec une soupape d'injection de carburant (1) comprenant une pluralité d'ouvertures de pulvérisation (7), un jet de carburant (41) étant produit à chaque fois à travers une ouverture de pulvérisation (7) et un nuage pulvérisé (42) étant produit dans la chambre de combustion (38) avec une enveloppe de carburant le limitant, par la pluralité de jets de carburant (41),
la soupape d'injection de carburant (1) étant disposée centralement au milieu du dessus de la chambre de combustion (39),
l'enveloppe de carburant du nuage pulvérisé (42) s'étendant sur 360° et l'enveloppe de carburant formant un angle d'ouverture (a1, a2), qui varie sur l'étendue de la périphérie du nuage pulvérisé (42), un premier angle d'ouverture (a1) de
l'enveloppe de carburant dans un premier plan (e1) étant supérieur à un deuxième angle d'ouverture (a2) dans un deuxième plan (e2) s'étendant perpendiculairement au premier plan (e1),
**caractérisé en ce que**
les ouvertures de pulvérisation (7) sont orientées de telle sorte et le dessus de la chambre de combustion (39) est configuré de telle sorte que le nuage pulvérisé (42) soit formé de manière à ce qu'un angle d'écartement uniforme (Aw) dans l'étendue périphérique du nuage pulvérisé (42) soit obtenu entre le dessus de la chambre de combustion (39) et l'enveloppe de carburant du nuage pulvérisé (42).

2. Système d'injection de carburant selon la revendication 1,
**caractérisé en ce que**
la soupape d'injection de carburant (1) injecte à travers le dessus de la chambre de combustion (39) s'élargissant coniquement depuis la soupape d'injection de carburant (1) dans la section transversale du deuxième plan (e2), le dessus de la chambre de combustion (39) s'élargissant avec une plus forte pente dans la section transversale du premier plan (e1).

3. Système d'injection de carburant selon la revendication 1 ou 2,
**caractérisé en ce que**
les ouvertures d'injection (7) de la soupape d'injection de carburant (1) sont orientées de telle sorte que le carburant émis du nuage pulvérisé (42) soit injecté dans la direction d'un creux de piston (43) du piston (40).

4. Système d'injection de carburant selon la revendication 3,
**caractérisé en ce que**
le creux de piston (43) présente au moins un rehaussement (44).

5. Système d'injection de carburant selon la revendication 4, **caractérisé en ce que** le rehaussement (44) est disposé centralement dans le creux de piston (43).

6. Système d'injection de carburant selon l'une quelconque des revendications 3 à 5,
**caractérisé en ce que**
les jets de carburant (41) injectés dans le creux de piston (43) présentent, dans le prolongement le long de leur axe de jet (45), à chaque fois les mêmes distance par rapport à la surface du creux de piston (43).

7. Système d'injection de carburant selon l'une quelconque des revendications précédentes,
**caractérisé en ce que**
les jets de carburant intérieurs (41) disposés au milieu du nuage pulvérisé (42) pénètrent moins profondément dans la chambre de combustion (38) que les jets de carburant extérieurs (41), car les diamètres des ouvertures de pulvérisation (7) des jets de carburant intérieurs (41) sont plus petits que les diamètres des jets de carburant extérieurs (41) et/ou les ouvertures de pulvérisation (7) des jets de carburant intérieurs (41) s'élargissent dans la région du côté de la pulvérisation.

8. Système d'injection de carburant selon l'une quelconque des revendications précédentes,
**caractérisé en ce que**
la soupape d'injection de carburant (1) présente de 20 à 40 ouvertures de pulvérisation (7).

9. Système d'injection de carburant selon l'une quelconque des revendications précédentes,
**caractérisé en ce que**
les ouvertures de pulvérisation (7) présentent, en section transversale les unes par rapport aux autres, un angle d'écartement (Sw) de 15° à 25°, notamment de 20°.
